# EUROPEAN PATENT APPLICATION

(11) **EP 4 535 572 A1**
(43) Date of publication of application: **09.04.2025**
(21) Application number: 23210255.8
(22) Date of filing: 16.11.2023
(51) Int. Cl.: H01R 4/34, H01R 4/20, H01R 11/05, F16B 33/00, F16B 33/02, F16B 39/22, H01R 11/26, H01R 13/03

(54) **CABLE JOINING ASSEMBLY FOR POWER CABLES AND METHOD THEREOF**

(30) Priority: 05.10.2023 IN 202311066838
(71) Applicant: RE Technologies GmbH, 22083 Hamburg (DE)
(72) Inventor: Anbalagan, Damodaran, 560049 Bangalore (IN); Dash, Abinash, 752102 Odisha (IN); Johnson, Paul, 560048 Bangalore Karnataka (IN); Charan, Chandrashekara, 571404 Ummadahalli Mandya (IN)
(74) Representative: Wetzel, Fritz

(57) **Abstract**

The present invention provides two pieces of lugs, which can be crimped outside the assemblies individually before the installation of cables and later it must be joined by using fasteners at later stage when need to be connected by using a handheld tightening tool.

## Description

### PREAMBLE TO THE DESCRIPTION:

The following specification particularly describes the nature of the invention and the manner in which it is to be performed:

### FIELD OF INVENTION

The present invention relates cable joining assembly, specifically it relates to the two-piece compression joint lug for power cables.

### BACKGROUND OF THE INVENTION

The following background discussion includes information that may be useful in understanding the present invention. It is not an admission that any of the information provided herein is prior art or relevant to the presently claimed invention, or that any publication specifically or implicitly referenced is prior art.

Press connectors are widely known and have been in use for decades. They are used to connect electrical conductors. A first cable, which consists of one or more wire-shaped electrical conductors, is intended to be connected to another electrical cable, which also consists of one or more wire-shaped electrical conductors. In this case, the respective cables do not have to be of identical design.

In this case, the press connector arrangements consist of a tubular element. Seen from its middle section, the tubular element forms two sleeves, each of which has an open mouth facing away from the middle section. The ends of a cable can then be inserted into each of these openings. The ends of the cables are usually pushed in until they meet. For example, DE3627599A1 discloses a cable connection for connecting two screened, plastic-insulated power cables whose wire insulation is intended to be accessible for a regenerating process, having a prefabricated sleeve body consisting of elastic, insulating material with integrated control electrodes. The cable connection is designed to be permeable to gas, by means of at least one small gas connecting tube in the screening region, possibly also in the conductor region. The screening wires which run beyond the sleeve body are fixed at a uniform distance from one another by means of spacers because of the high heating-current load.

Further, EA007171B1 discloses an isolating tape with high permittivity is applied on the insulating tape edge. Conductors are connected by sleeves, spacing between the sleeves and insulation is filled with mastic, upon each sleeve the dielectric with high permittivity is applied, above it an insulating dielectric is applied. An insert-spacer is arranged between the conductors.

A volume netting is wound around the conductors, over it a vinyl tape and a conducting screen are wound, the spacing between the conductors is filed with a compound. A ground wire fastened to the armor and casings as applied over the screen. The conductor is impregnated with a compound in areas close to the armor cut. The conductor is placed into a shrink tube, the tube overlaps the jute cover. A polyethylene housing made from split elements is arranged above the tube the joints of the split elements are tightly sealed using shrink tubes.

In another document, KR20200101857A discloses a power cable and an intermediate connection structure for connecting the same, the present invention relates to an intermediate connection structure of a power cable in which a metal sheath of the power cable and a metal sheath restoration layer of the intermediate connection structure have guaranteed airtightness or watertightness, thereby preventing deformation or damage due to stress concentration or stress of a soft hole unit for joining and minimizing a heat history inside the cable during formation of the soft hole unit.

Further, DE202009010121U1 discloses a press connector assembly with a first sleeve of conductive material, for receiving an end of a first single or multiwire conductive cable and to hold this cable after a Diameter reducing pressing process is formed and a open mouth for insertion of the end of the cable owns, with a second sleeve of conductive Material used to hold a second single or multiwire conductive cable and to retain this cable a diameter reducing pressing process is formed and an open mouth for insertion of the end of this Cable owns, with one the first sleeve and the second Sleeve on the respective open mouths opposite side connecting middle section of conductive Material.

The above-mentioned solution of joining the cable is well adapted for open space repair or joining. However, performing cable joint in a confined space is difficult that the crimping tool cannot be accommodated to perform crimping of compression lugs.

The present invention provides two pieces of lugs, which can be crimped outside the assemblies individually before the installation of cables and later it must be joined by using fasteners at later stage when need to be connected.

### OBJECTIVE OF THE PRESENT INVENTION

An objective of the present invention is to provide with two pieces of lugs, which can be crimped outside the assemblies individually before the installation of cables and later it has to be joined by using fasteners at later stage when need to be connected.

An objective of the present invention is to provide with two pieces of lugs, which can be crimped outside the assemblies individually before the installation of cables and later joined at their exact assembly by using a handheld tightening tool.

### Summary of the Invention:

In an aspect, the invention provides a cable joining assembly comprising:
a) a first lug (100) comprises a flat surface at the one end and a hollow cylinder portion at another end, wherein the flat surface comprises at least three holes;
b) a second lug (200) comprises a flat surface at the one end and a hollow cylinder portion at another end, wherein the flat surface comprises at least three holes;
c) plurality of fastening bolts (300) comprises threaded portion at outer surface; and
d) plurality of nuts (400) comprises threaded portion at inner surface;
wherein the first lug (100) and the second lug (200) flat surface are attached with each other by passing the plurality of fastening bolts (300) passing through the plurality of holes and tightening the fastening bolts by the plurality of nuts (400), wherein mating point of the flat surface and hollow cylinder portion of the first lug (100) and the second lug (200) comprises a protruding portion configured to balance shear force in y-axis due to high pulling force.

In an embodiment, the hollow cylindrical portion of the first lug (100) and the second lug (200) configured to carry the power cable through its hollow portion.

In an embodiment, the connector lugs (100, 200) are made from Electrolytic Tough Pitch Copper and are tin-plated having width of 5µm.

In an embodiment, the fastening bolts (300) are zinc coated.

In an embodiment, the protruding portions (105, 205) is 1.5 mm (millimetre) thicker than the flat surfaces of the first lug (100) and the second lug (200), wherein after mating the first lug (100) and the second lug (200) together have diameter of 29mm and the protruding portions (105, 205) have diameter of 32mm.

In an embodiment, the fastening bolts (300) threaded portion is coated with precoat 85, wherein the precoat 85 coating ensures for securing and sealing threaded part which gets activated when the nuts (400) are tightened.

In an embodiment, the plurality of nuts (400) is two reversible hex type.

In an aspect, the invention provides a method of operation the cable joining assembly, comprising steps of:
a) attaching a first lug (100) and a second lug (200) flat surfaces are attached with each other by passing the plurality of fastening bolts (300) passing through the plurality of holes and tightening the fastening bolts by the plurality of nuts (400), wherein the hollow cylindrical portion of the first lug (100) and the second lug (200) configured to carry the power cable through its hollow portion.
b) wherein mating point of the flat surface and hollow cylinder portion of the first lug (100) and the second lug (200) comprises a protruding portion configured to balance shear force in y-axis due to high pulling force.

This together with the other aspects of the present invention along with the various features of novelty that characterized the present disclosure is pointed out with particularity in claims annexed hereto and forms a part of the present invention. For better understanding of the present disclosure, its operating advantages, and the specified objective attained by its uses, reference should be made to the accompanying descriptive matter in which there are illustrated exemplary embodiments of the present invention.

### DETAILED DESCRIPTION OF DRAWING:

The accompanying drawings, which are incorporated in and constitute a part of this disclosure, illustrate exemplary embodiments and, together with the description, explain the disclosed principles. The reference numbers are used throughout the figures to describe the features and components. Some embodiments of system and/or methods in accordance with embodiments of the present subject matter are now described, by way of example only, and regarding the accompanying figures, in which:

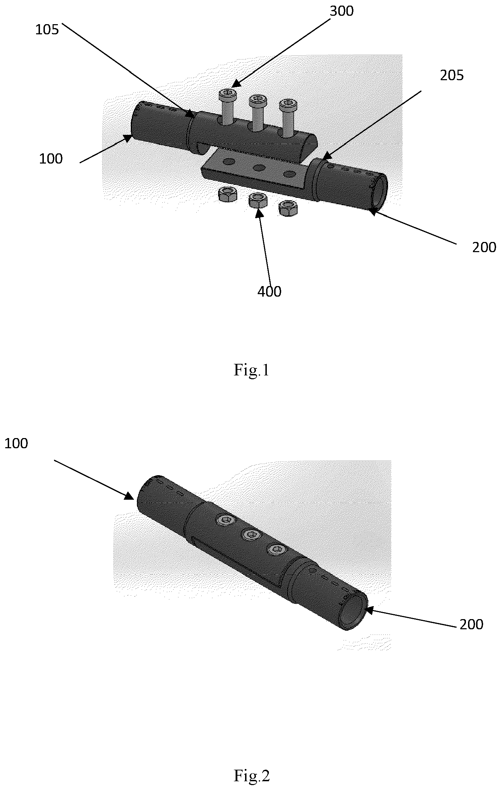

**Figure 1****:** illustrates the overview of crimp connector lug overview in open position.
**Figure 2****:** illustrates the overview of crimp connector lug overview in closed position.

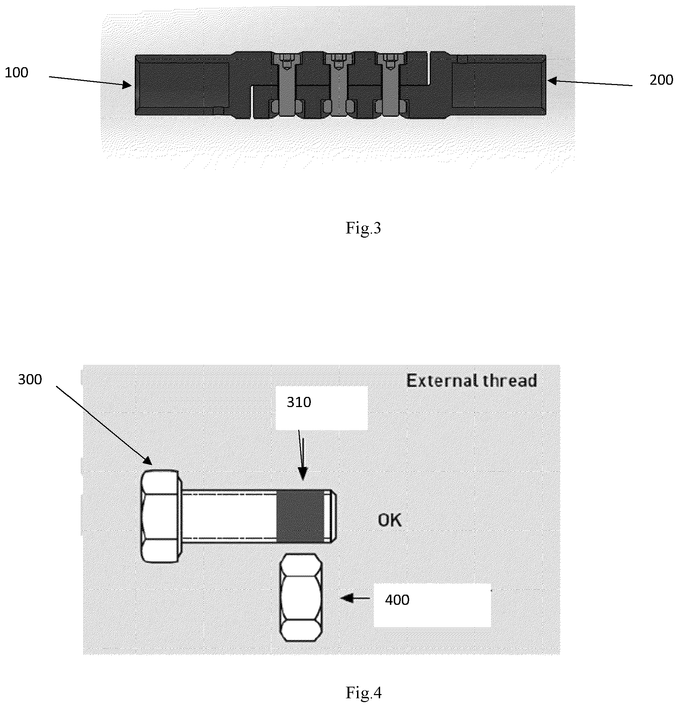

**Figure 3****:** illustrates the cross sectional view of crimp connector lug.
**Figure 4****:** illustrates the view of bolt coated with the precoat.
**Figure 5****:** illustrates the view hex lock nut.
**Figure 6****:** illustrates the assembled lug where pulling force applied for one second to check its strength.
**Figure 7****:** illustrates the assembled lug where pulling force applied two second to check its strength.
**Figure 8****:** illustrates the total deformation of assembled lug after application of force of the 15000 newton is applied for two seconds.
**Figure 9****:** In which figure 9(a) shows the crimp connector lug without protruding portion and figure 9(b) shows crimp connector lug protruding portion.

### DESCRIPTION OF THE INVENTION:

In the present document, the word "exemplary" is used herein to mean "serving as an example, instance, or illustration." Any embodiment or implementation of the present subject matter described herein as "exemplary" is not necessarily to be construed as preferred or advantageous over other embodiments.

While the disclosure is susceptible to various modifications and alternative forms, specific embodiment thereof has been shown by way of example in the drawings and will be described in detail below. It should be understood, however that it is not intended to limit the disclosure to the specific forms disclosed, but on the contrary, the disclosure is to cover all modifications, equivalents, and alternative falling within the spirit and the scope of the disclosure.

The present invention provides two pieces of lugs assembly which can be crimped outside the assemblies individually before the installation of cables and later it has to be joined by using fasteners at later stage when need to be connected.

In an aspect of the present invention two pieces of lugs assembly can be crimped outside the assemblies individually before the installation of cables and later joined at their exact assembly by using a handheld tightening tool.

In an aspect, the invention provides a cable joining assembly comprising:
a) a first lug (100) comprises a flat surface at the one end and a hollow cylinder portion at another end, wherein the flat surface comprises at least three holes;
b) a second lug (200) comprises a flat surface at the one end and a hollow cylinder portion at another end, wherein the flat surface comprises at least three holes;
c) plurality of fastening bolts (300) comprises threaded portion at outer surface; and
d) plurality of nuts (400) comprises threaded portion at inner surface;
wherein the first lug (100) and the second lug (200) flat surface are attached with each other by passing the plurality of fastening bolts (300) passing through the plurality of holes and tightening the fastening bolts by the plurality of nuts (400), wherein mating point of the flat surface and hollow cylinder portion of the first lug (100) and the second lug (200) comprises a protruding portion configured to balance shear force in y-axis due to high pulling force

In an embodiment, the hollow cylindrical portion of the first lug (100) and the second lug (200) configured to carry the power cable through its hollow portion.

In an embodiment, the hollow cylinder portion of the first lug (100) and the second lug (200) comprises plurality of holes on its surface for visual inspection of power cable for crimping.

In an embodiment, the protruding portions (105, 205) is 1.5 mm (millimetre) thicker than the flat surfaces of the first lug (100) and the second lug (200), wherein after mating the first lug (100) and the second lug (200) together have diameter of 29mm and the protruding portions (105, 205) have diameter of 32mm.

In an embodiment, the connector lugs (100, 200) are made from Electrolytic Tough Pitch Copper and are tin-plated having width of 5µm.

In an embodiment, the fastening bolts (300) are zinc coated.

In an embodiment, the fastening bolts (300) threaded portion is coated with precoat85, wherein the precoat 85 coating ensures for securing and sealing threaded part which gets activated when the nuts (400) are tightened.

In an embodiment, the plurality of nuts (400) is two reversible hex type.

In an aspect, the invention provides a method of operation the cable joining assembly, comprising steps of:
a) attaching a first lug (100) and a second lug (200) flat surfaces are attached with each other by passing the plurality of fastening bolts (300) passing through the plurality of holes and tightening the fastening bolts by the plurality of nuts (400), wherein the hollow cylindrical portion of the first lug (100) and the second lug (200) configured to carry the power cable through its hollow portion.
b) wherein mating point of the flat surface and hollow cylinder portion of the first lug (100) and the second lug (200) comprises a protruding portion configured to balance shear force in y-axis due to high pulling force.

In an embodiment, the two-piece compression lug has flat surface on the connecting side of the lugs, which is more suitable in terms by fastening it by using 3 units of M8 fasteners. On cable side, the lugs are with normal tube dimensioned as per DIN standard for cable intersection and crimping are made.

In an embodiment, the two-piece lug of the present invention is made from Cu-ETP (Electrolytic Tough Pitch Copper) according to DIN EN 13600 and tin-plated not less than 5µm thick. Further, the fastening bolts thread are pre-coated with thread lock coating, paint-like solvent-free, reactive coating for securing and sealing threaded part which gets activated when the nut is tightened. Further, two-way Reversible Lock Nuts (also known as center-lock nuts) is used as an additional safety lock suitable for using in vibrating prone environment.

In an embodiment, the two-piece lug of the present invention is suitable for Cu-Cu cable joint when using 240 mm² Cu cable in power and distribution application. However, the dimension can be scaled up for different size of lugs based on cable size and conductor material.

In an embodiment, the two-piece lug of the present invention is also suitable for aluminium cable joint, for tower cable joint. The two-piece lug can be installed at ground level during cable preparations. After installing the Tower segment at site, the pre-installed lugs can be joined at lesser time, reducing the overall installation time and project cost.

In an embodiment, the two-piece lug of the present invention is used in the location below the gearbox, where there is confined space for crimping. On the Nacelle cable set, one piece of lug will be crimped at indoor Nacelle assemble before the assembly of the Gearbox. The crimped end of the cables will be protected immediately against ingress of moisture and contamination. The second piece of the lug will be crimped to the Nacelle loop cable end on gear box side and will be connected once the Turbine is installed at site. The crimped lugs are connected by using 3 sets of M8 fasteners with locknut and locking adhesive coated to bolt thread.

In an embodiment, the two-piece lugs of the present invention are connected by using 3 sets of M8 fasteners and M8 bolt. Further, M8 bolt is zinc plated & two way reverse locknut. These fasteners are special fasteners used for better locking action, to resist loosening caused by shock, vibration and other dynamic forces caused in the system.

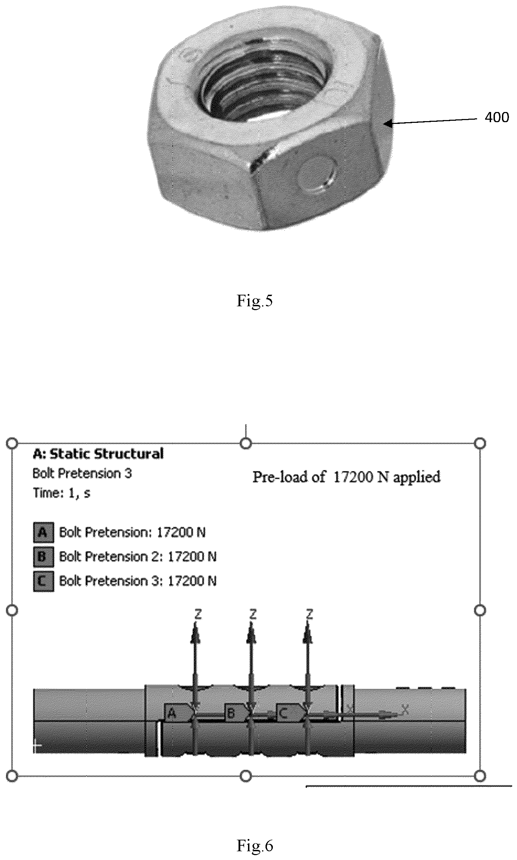

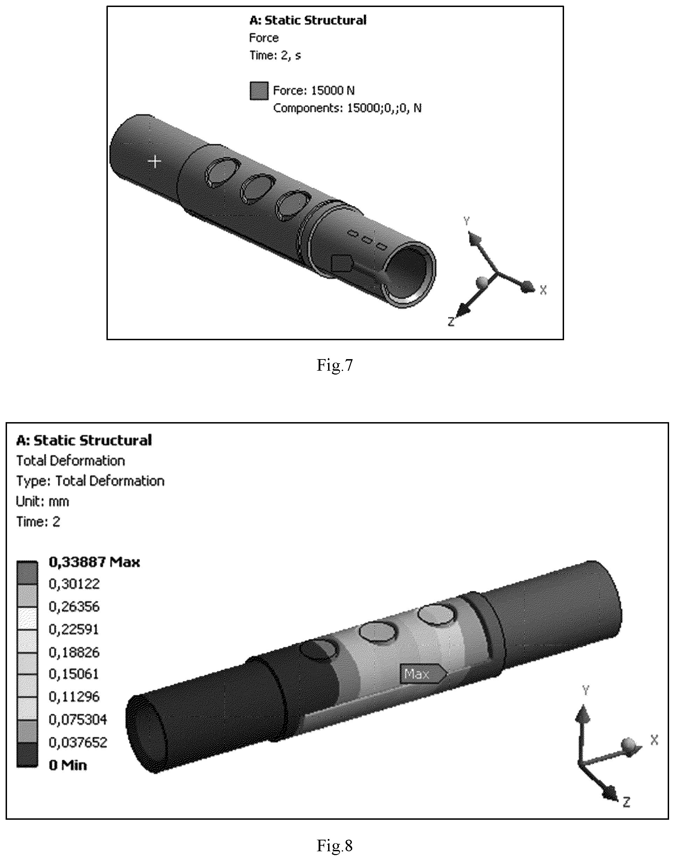

As shown in the Fig. 6, after two-piece compression lug are connected by the three pieces of nut and bolt. The pull force of the two piece compression lug was tested. Each bolt pretension is applied with the 17200 Newton pulling force of duration of one second. The deformation in the assembled lugs with three holes are very minimum. Further, as shown in Fig. 7 and Fig. 8 Force of the 15000 newton is applied for the two second on the assembled lugs for testing its force bearing capacity, the total deformation of 0,34mm in the cable lug assembly is observed.

### Experiment verification:

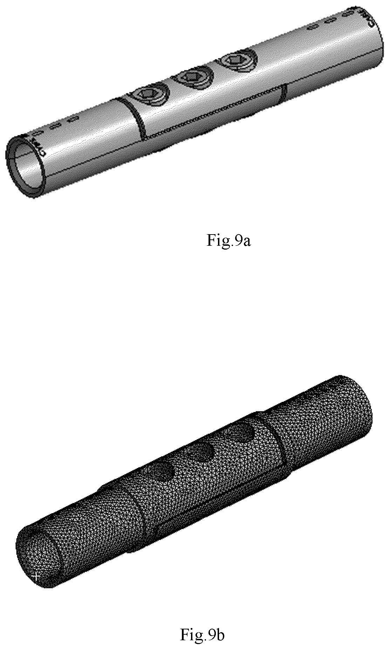

As shown in Figs. 6 to 9, the two-piece lug without protruding portion (Fig. 9(b)) tested for the pull force in simulated environment. At first step two-piece compression lug are connected by the three pieces of nut and bolt and pull force of the two piece compression lug was tested. Each bolt pretension is applied with the 17200 Newton pulling force of duration of one second. The deformation in the assembled lugs observed with the standard load parameters and two-piece lug without protruding portion failed to bear the assigned standard load.

Further, the -piece lug with protruding portion is applied with the 17200 Newton pulling force of duration of one second. The deformation in the assembled lugs with three holes are very minimum. Further, as shown in Fig. 7 and Fig. 8 Force of the 15000 newton is applied for the two second on the assembled lugs for testing its force bearing capacity, the total deformation of 0,34mm in the cable lug assembly is observed. It is observed from the simulation that two-piece lug with protruding portion is able to easily bear the standard pull load without any significant deformation and adapted to bear the shear force in y-axis due to high pulling force of the power cable.

In another embodiment, the external thread of the bolt is coated with Precoat 85, paint-like and solvent-free, reactive coating for securing and sealing threaded part which gets activated when the nut is tightened. Precoat 85 is a paint-like and solvent-free, reactive coating based on microencapsulated acrylates for securing and sealing threaded parts. The coating is dry, grip-resistant, and suitable for any type of assembly process, especially series production. The microcapsules are destroyed by pressure and shear stress during assembly, which released components mix and harden.

The assembly of precoat coated screw occurs mechanically or manually with conventional tools. The female thread must be free of dust, oil. Precoat and component adhesives and do not require either an air seal or metal ions for curing. For sealing applications, at least 4 thread turns must be coated and installed overlapping to achieve a reliable sealing effect.

In an embodiment, the system of the present invention uses two-way reversible locking mechanism (also known as center-lock nuts) comes with distorted thread in the middle and ability to be used either top-up or top-down. The distorted internal threads increase resistance on the mating part. This creates a locking mechanism in the center of the nut, which helps it resist loosening from vibration. With the locking mechanism being at the center of the nut, center lock nuts can be started from either side.

## Claims

1. A cable joining assembly comprising:
a) a first lug (100) comprises a flat surface at the one end and a hollow cylinder portion at another end, wherein the flat surface comprises at least three holes;
b) a second lug (200) comprises a flat surface at the one end and a hollow cylinder portion at another end, wherein the flat surface comprises at least three holes;
c) plurality of fastening bolts (300) comprises threaded portion at outer surface; and
d) plurality of nuts (400) comprises threaded portion at inner surface;
wherein the first lug (100) and the second lug (200) flat surface are attached with each other by passing the plurality of fastening bolts (300) through the three holes and tightening the fastening bolts by the plurality of nuts (400), wherein mating point of the flat surface and hollow cylinder portion of the first lug (100) and the second lug (200) comprises a protruding portions (105, 205) configured to balance shear force in y-axis due to high pulling force.

2. The cable joining assembly comprising as claimed in claim 1, wherein the hollow cylindrical portion of the first lug (100) and the second lug (200) configured to carry the power cable through its hollow portion.

3. The cable joining assembly comprising as claimed in claim 1, wherein the hollow cylinder portion of the first lug (100) and the second lug (200) comprises plurality of holes on its surface for visual inspection of power cable for crimping.

4. The cable joining assembly comprising as claimed in claim 1, wherein the protruding portions (105, 205) is 1.5 mm (millimetre) thicker than the flat surfaces of the first lug (100) and the second lug (200), wherein after mating the first lug (100) and the second lug (200) together have diameter of 29mm and the protruding portions (105, 205) have diameter of 32mm.

5. The cable joining assembly comprising as claimed in claim 1, wherein the connector lugs (100, 200) are made from Electrolytic Tough Pitch Copper and are tin-plated having width of 5µm.

6. The cable joining assembly comprising as claimed in claim 1, wherein the fastening bolts (300) are zinc coated.

7. The cable joining assembly comprising as claimed in claim 1, wherein the fastening bolts (300) are two-way reversible lock nuts comprises distorted thread in the middle, wherein the distorted internal threads increase resistance on the mating part.

8. The cable joining assembly comprising as claimed in claim 1, wherein the fastening bolts (300) threaded portion is coated with precoat 85, wherein the precoat 85 coating ensures for securing and sealing threaded part which gets activated when the nuts (400) are tightened.

9. The cable joining assembly comprising as claimed in claim 1, wherein the plurality of nuts (400) is two reversible hex type.

10. A method of operation the cable joining assembly as claimed in claim, comprising steps of:
a) attaching a first lug (100) and a second lug (200) flat surfaces are attached with each other by passing the plurality of fastening bolts (300) passing through the plurality of holes and tightening the fastening bolts by the plurality of nuts (400), wherein the hollow cylindrical portion of the first lug (100) and the second lug (200) configured to carry the power cable through its hollow portion.
b) wherein mating point of the flat surface and hollow cylinder portion of the first lug (100) and the second lug (200) comprises a protruding portion (105, 205) configured to balance shear force in y-axis due to high pulling force.
